# EUROPEAN PATENT APPLICATION

(11) **EP 4 040 796 A1**
(43) Date of publication of application: **10.08.2022**
(21) Application number: 20877871.2
(22) Date of filing: 09.10.2020
(51) Int. Cl.: H04Q 11/00

(54) **SYNCHRONIZATION METHOD AND APPARATUS, DEVICE AND STORAGE MEDIUM**

(30) Priority: 15.10.2019 CN 201910979578
(71) Applicant: ZTE Corporation, Shenzhen, Guangdong 518057 (CN)
(72) Inventor: ZHANG, Yuanbin, Shenzhen, Guangdong 518057 (CN); WANG, Youbao, Shenzhen, Guangdong 518057 (CN)
(74) Representative: Canzler & Bergmeier Patentanwälte Partnerschaft mbB
(86) International application number: PCT/CN2020/119922
(87) International publication number: WO 2021/073444

(57) **Abstract**

The present application provides a synchronization method and apparatus, a device, and a storage medium. The method comprises: determining an interface event time stamp point of synchronization event information, and encapsulating the synchronization event information; and inserting the encapsulated synchronization event information into a synchronization information channel of a first preset frame or a second preset frame to perform transmission.

## Description

The present application claims priority to the Chinese Patent Application No. 201910979578.9 filed with the Chinese Patent Office on October 15, 2019, the entire contents of which are incorporated herein by reference.

### TECHNICAL FIELD

The present application relates to the field of communication technologies, and in particular, to a synchronization method, a synchronization apparatus, a device, and a storage medium.

### BACKGROUND

Due to advantages of large bandwidth, rigid pipe, and perfect operation administration and maintenance (OAM), the optical transport network (OTN) technology is widely applied in the field of 5th Generation mobile communication technology (5G). The OTN technology supporting 5G transmission provides a dual-rate OTN interface, which is different from a traditional OTN interface in that, a format of the dual-rate OTN interface has changed. In an actual communication process, a frame structure of the dual-rate OTN interface would protect a synchronization information channel, however, since the frame structure of the dual-rate OTN interface includes a mapping processing, accuracy is affected, and high-accuracy time synchronization expected by 5G cannot be met.

### SUMMARY

The present application provides a synchronization method, a synchronization apparatus, a device and a storage medium, so that high-accuracy time synchronization is implemented.

An embodiment of the present application provides a synchronization method, including:
determining an interface event timestamp point of synchronization event information, and encapsulating the synchronization event information; and
inserting the encapsulated synchronization event information into a synchronization information channel of a first preset frame or a second preset frame for performing transmission.

An embodiment of the present application provides a synchronization apparatus, including:
a determining module configured to determine an interface event timestamp point of synchronization event information, and encapsulate the synchronization event information; and
a transmission module configured to insert the encapsulated synchronization event information into a synchronization information channel of a first preset frame or a second preset frame for performing transmission.

An embodiment of the present application provides a device, including:
a memory and one or more processors;
the memory is configured to store one or more programs;
the one or more programs, when executed by the one or more processors, cause the one or more processors to implement the synchronization method described above.

An embodiment of the present application provides a storage medium having a computer program stored thereon, the computer program, when executed by a processor, implements the synchronization method described above.

### BRIEF DESCRIPTION OF DRAWINGS

Fig. 1 is a schematic diagram of a structure of an OTU25(u)/50(u) frame according to the present application;
Fig. 2a is a schematic diagram of a structure of an OTU25(u)-RS frame according to the present application;
Fig. 2b is a schematic diagram of a structure of an OTU50(u)-RS frame according to the present application;
Fig. 3 is a flowchart of a synchronization method according to the present application;
Fig. 4 is a schematic diagram of a 25G OTN application scenario according to the present application;
Fig. 5 is a schematic diagram of adding a synchronization information channel and a multi-frame indication in an OTU25(u)-RS frame according to the present application;
Fig. 6 is a schematic diagram of a position of a boundary of an OTU25(u) multi-frame in an OTU25(u)-RS frame according to the present application;
Fig. 7 is a structural block diagram of a synchronization apparatus according to the present application; and
Fig. 8 is a schematic structural diagram of a device according to the present application.

### DETAIL DESCRIPTION OF EMBODIMENTS

The embodiments of the present application are further described below with reference to the accompanying drawings. It should be noted that the embodiments of the present application and the characteristics in the embodiments may be combined with each other if no conflict is incurred.

Optical transport network (OTN) standard is formulated by the International Telecommunication Union-Telecommunication Standardization Department (ITU-T), and is an important standard for optical transport equipment, and almost all long-distance transport networks are formed of equipment based on the OTN standard.

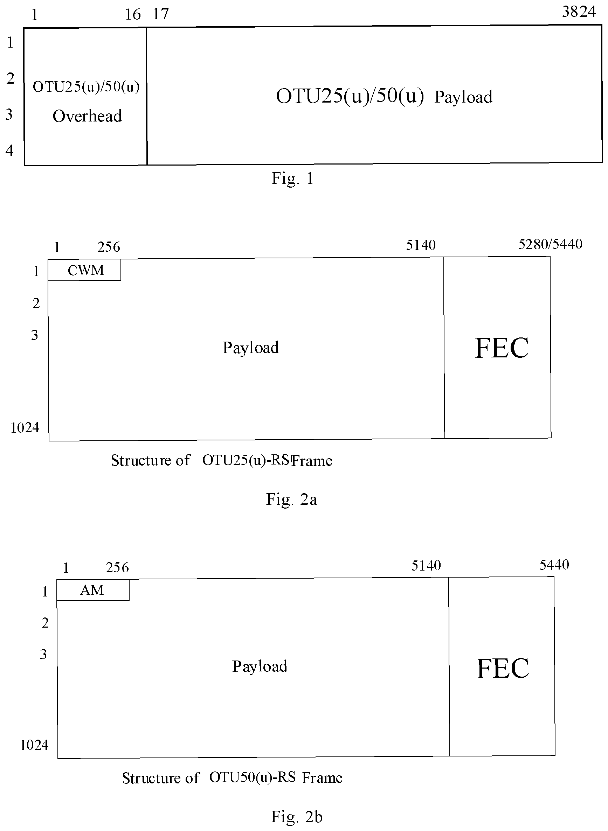

The OTN technology supporting 5G transmission provides a dual-rate OTN interface, for example, the dual-rate OTN interface is a 25G/50G OTN interface, which is different from a traditional OTN interface in that, a format of the 25G/50G OTN interface has changed, and in order to facilitate a description of the format of the 25G/50G OTN interface, the format of the 25G/50G OTN interface is recorded as an Optical Channel Transport Unit (OTU) 25(u)/50(u). The OTU 25(u)/50(u) is a row-column structure based on 4×3824. Fig. 1 is a schematic diagram of a structure of an OTU25(u)/50(u) frame according to the present application. As shown in Fig. 1, the structure of the OTU25(u)/50(u) frame excludes forward error correction (FEC), and before transmission is performed by using a physical interface, it is desired to map the OTU25(u)/50(u) frame to an OTU25(u)/50(u)-Reed Solomon (RS) frame, the OTU25(u)/50(u)-RS frame is an FEC frame, and is a row-column structure of 1024×5280 or 1024×5440.

Fig. 2a is a schematic diagram of a structure of an OTU25(u)-RS frame according to the present application, Fig. 2b is a schematic diagram of a structure of an OTU50(u)-RS frame according to the present application. As shown in Fig. 2a, the OTU25(u)-RS frame includes three parts, i.e., a CodeWord Marker (CWM), a FEC and a payload area. As shown in Fig. 2b, the OTU50(u)-RS frame includes three parts, i.e., an Alignment Marker (AM), a FEC and a payload area.

In an actual communication process, the structure of the OTU25(u)/50(u) frame would protect a synchronization information channel, however, due to an addition of a mapping processing from the OTU25(u)/50(u) frame to the OTU25(u)/50(u)-RS frame, accuracy is affected, and high-accuracy time synchronization expected by 5G cannot be met. The present application provides a synchronization method to implement relatively high-accuracy time synchronization.

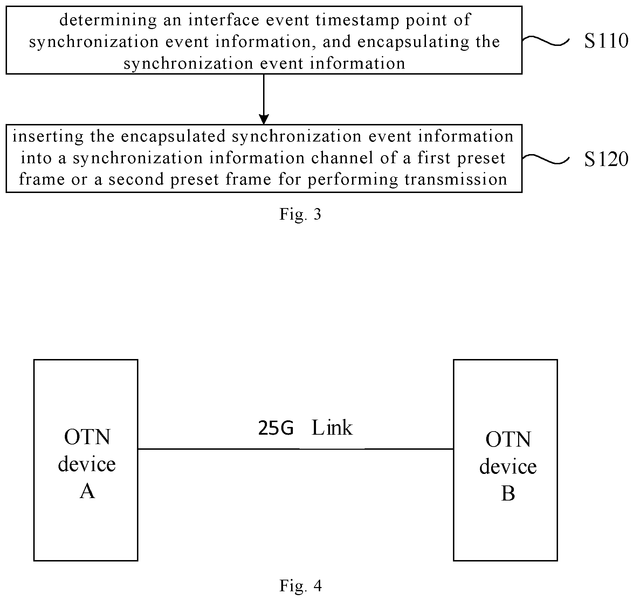

Fig. 3 is a flowchart of a synchronization method according to the present application. As shown in Fig. 3, the synchronization method includes operations S110 and S120.

At operation S110, determining an interface event timestamp point of synchronization event information, and encapsulating the synchronization event information.

At operation S120, inserting the encapsulated synchronization event information into a synchronization information channel of a first preset frame or a second preset frame for performing transmission.

In some implementations, at a sending terminal, the interface event timestamp point of synchronization event information is determined, the synchronization event information is encapsulated and then inserted into the synchronization information channel of the first preset frame or the second preset frame for performing transmission; and at a receiving terminal, timestamp information is generated at a start position of each received first preset frame, in response to that the synchronization information channel of the first preset frame or the second preset frame bears/carries the interface event timestamp point of the synchronization event information, the timestamp information acquired when the first preset frame is received is compared with the interface event timestamp point, so as to implement time synchronization.

In some implementations, the determining the interface event timestamp point of the synchronization event information includes: taking a first preset multi-frame event as the interface event timestamp point of the synchronization event information; and the inserting the encapsulated synchronization event information into the synchronization information channel of the first preset frame or the second preset frame for performing transmission includes: inserting the encapsulated synchronization event information into the synchronization information channel of the first preset frame or the synchronization information channel of an M-th first preset frame following the first preset frame for performing transmission, M is a positive integer. In the implementations, in a case where a start position of the first preset frame or the first preset multi-frame event is taken as the interface event timestamp point of the synchronization event information, the encapsulated synchronization event information is inserted into the synchronization information channel of the first preset frame or the synchronization information channel of the M-th first preset frame following the first preset frame for performing transmission.

In some implementations, the determining the interface event timestamp point of the synchronization event information includes: taking a first preset multi-frame event as the interface event timestamp point of the synchronization event information; and the inserting the encapsulated synchronization event information into the synchronization information channel of the first preset frame or the second preset frame for performing transmission includes: inserting the encapsulated synchronization event information into the synchronization information channel of the second preset frame borne/carried by the first preset frame. In the implementations, in a case where the first preset multi-frame event is taken as the interface event timestamp point of the synchronization event information, the encapsulated synchronization event information is inserted into the synchronization information channel of the second preset frame borne by the first preset frame.

In some implementations, the determining the interface event timestamp point of the synchronization event information includes: taking a second preset multi-frame event as the interface event timestamp point of the synchronization event information; and the inserting the encapsulated synchronization event information into the synchronization information channel of the second preset frame for performing transmission includes: compensating the encapsulated synchronization event information according to a preset number of offset bits; and inserting the compensated synchronization event information into the synchronization information channel of the second preset frame for performing transmission. In the implementations, a start position of the second preset multi-frame event is taken as the interface event timestamp point of the synchronization event information.

In the implementations, the first preset frame can bear a plurality of the second preset frames. For example, the first preset frame may bear more than 40 second preset frames.

In some implementations, the synchronization information channel of the first preset frame is determined by one of followings: a first preset number of bits of CWM overhead in the first preset frame; and a second preset number of bits of payload area in the first preset frame. In the implementations, a part of bits of the CWM overhead in the first preset frame may be used as the synchronization information channel of the first preset frame; and a part of bits in the payload area in the first preset frame may be used as the synchronization information channel of the first preset frame

In some implementations, the number of the offset bits is determined by one of followings: in response to that a first frame of the second preset multi-frame is mapped to the first preset frame, calculating a number of offset bits between a start position of the first frame of the second preset multi-frame and a start position of the first preset frame.

In some implementations, a statistical way of a number of the first preset multi-frames includes one of followings: performing statistics by accumulating a number of inserted alignment markers (AMs) or CWMs; adopting a third preset number of bits in AMs or CWMs as a statistical overhead of the number of the first preset multi-frames; and adopting a fourth preset number of bits in payload area in the first preset frame as a statistical overhead of the number of the first preset multi-frames. In the implementations, each first preset frame includes one AM or CWM, the number of the first preset multi-frames may be calculated according to a number of inserted AMs or CWMs; or a statistical overhead of the number of the first preset multi-frames is set in the AMs or CWMs, and the statistical overhead is used for obtaining the number of the first preset multi-frames a statistical way; or a statistical overhead of the number of the first preset multi-frames is set in the payload area, and the statistical overhead is used for obtaining the number of the first preset multi-frames by a statistical way.

In some implementations, in response to that the synchronization information channel and/or the statistical overhead of a number of multi-frames is determined by utilizing a preset number of bits in AMs or CWMs, scrambling operation is performed on the synchronization information channel of the first preset frame and/or the statistical overhead of the number of multi-frames. In the implementations, a part of bits in the AMs or CWMs is used as the synchronization information channel and/or the statistical overhead of the number of multi-frames, and in order to keep a balance between bits 0 and 1 in transmission, the synchronization information channel of the first preset frame and/or the statistical overhead of the number of multi-frames is scrambled and then sent.

In some implementations, the first preset frame is an OTU25(u)/50(u)-RS frame, the second preset frame is an OTU25(u)/50(u) frame, the first preset multi-frame is an OTU25(u)/50(u)-RS multi-frame, and the second preset multi-frame is an OTU25(u)/50(u) multi-frame.

In some implementations, at a sending terminal, an OTU25(u)/50(u) frame is mapped to an OTU25(u)/50(u)-RS frame, each OTU25(u)/50(u)-RS frame may bear more than 40 OTU25(u)/50(u) frames, a start position of the OTU25(u)/50(u)-RS frame or the OTU25(u)/50(u)-RS multi-frame is taken as an interface event timestamp point of synchronization event information, the synchronization event information is encapsulated and then inserted into the OTU25(u)/50(u)-RS frame, or inserted into an OTU25(u)/50(u) frame borne in an M-th OTU25(u)/50(u)-RS frame following the OTU25(u)/50(u)-RS frame for performing transmission.

In some implementations, CWM overhead in an OTU25(u)-RS frame is 256 bits, the CWM overhead is configured in the OTU25(u)-RS frame for performing a framing processing on a FEC codeword, and according to related standard protocols, the framing processing can be implemented by first 64 bits. Therefore, all or a part of remaining 192 bits may be used as a synchronization information channel of the OTU25(u)-RS frame (for example, 128 bits may be used as a synchronization information channel, and a bandwidth thereof is 0.6Mbit/s), a start position of the OTU25(u)-RS frame or the OTU25(u)-RS multi-frame is taken as an interface event timestamp point of synchronization event information, and the synchronization event information is encoded and then placed in the synchronization information channel (i.e., a part of positions in CWM) of the OTU25(u)-RS frame or a K-th OTU25(u)-RS frame following the OTU25(u)-RS frame, and in order to keep a balance between bits 0 and 1 in transmission, the synchronization information channel of the OTU25(u)-RS frame is scrambled and then sent, K is a positive integer.

In some implementations, a part of bits (for example, 128 bits) in a payload area of an OTU25(u)/50(u)-RS frame are used as a synchronization information channel, a start position of the OTU25(u)/50(u)-RS frame or an OTU25(u)/50(u)-RS multi-frame is taken as a timestamp point of synchronization event information, the synchronization event information is encoded and then placed in the synchronization information channel of the OTU25(u)/50(u)-RS frame or a K-th OTU25(u)/50(u)-RS frame following the OTU25(u)/50(u)-RS frame, and in order to keep a balance between bits 0 and 1 in transmission, the synchronization information channel of the OTU25(u)/50(u)-RS frame is scrambled and then sent, K is a positive integer.

In some implementations, in a case where a first preset multi-frame event is used as an interface event timestamp point of synchronization event information, a generation way of the synchronization event information includes: generating the synchronization event information every first preset number N1 OTU25(u)/50(u)-RS frames, that is, the synchronization event information is stamped according to a start position of the OTU25(u)/50(u)-RS multi-frame, a number of OTU25(u)/50(u)-RS multi-frames may obtained through performing statistics on N1 by accumulating a number of inserted AMs or CWMs, or a part of bits in unused 192 bits in the AMs or CWMs in the OTU25(u)/50(u)-RS frame may be allocated for a multi-frame indication overhead of the OTU25(u)/50(u)-RS multi-frame, N1 is a positive integer.

In some implementations, in a case where a second preset multi-frame event is used as an interface event timestamp point of synchronization event information, a generation way of the synchronization event information includes: generating the synchronization event information every second preset number N2 OTU25(u)/50(u) frames. Exemplarily, taking that the synchronization event information is generated every 256 OTU25(u)/50(u) frames as an example, a boundary of the OTU25(u)/50(u)-RS frame or multi-frame is used as an interface event timestamp point of the synchronization event information, that is, a timestamp is acquired at a start position of a first frame of every 256 OTU25(u)/50(u) multi-frames. In such case, a number of offset bits between the start position of the first frame of the OTU25(u)/50(u) multi-frames and a first bit of the OTU25(u)/50(u)-RS frame when mapping the OTU25(u)/50(u) frame to the OTU25(u)/50(u)-RS frame is to be calculated, and synchronization event information acquired at the start position of the OTU25(u)/50(u)-RS frame or multi-frame is compensated by using the number of the offset bits, the compensated synchronization event information is placed in the synchronization information channel of the OTU25(u)/50(u)-RS frame for performing transmission.

In some implementations, at a receiving terminal, timestamp information is generated at a start position of each received OTU25(u)/50(u)-RS frame, in response to that a synchronization information channel of the OTU25(u)/50(u)-RS frame, or a synchronization information channel of an OTU25(u)/50(u) frame borne in the OTU25(u)/50(u)-RS frame, or the OTU25(u)/50(u)-RS frame, bears a first frame of 256 OTU25(u)/50(u) multi-frames, timestamps acquired by receiving the OTU25(u)/50(u)-RS frames are compared with timestamps carried in the OTU25(u)/50(u)-RS frame so as to implement time synchronization.

In some implementations, Fig. 4 is a schematic diagram of a 25G OTN application scenario according to the present application. As shown in Fig. 4, two OTN devices, including an OTN device A and an OTN device B, are configured in an application scenario of 25G transmission, and the application scenario of 25G transmission is formed by using the two OTN devices including the OTN device A and the OTN device B.

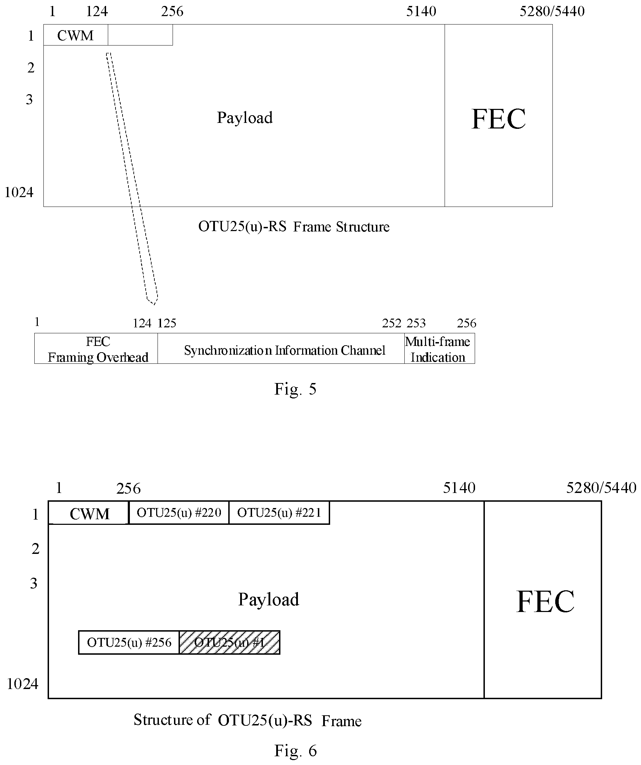

At operation 1, using 4 bits from 253-th to 256-th positions in CWM in an OTU25(u)-RS frame as a multi-frame indication overhead, and using 128 bits from 125-th to 252-th positions as a synchronization information channel. Fig. 5 is a schematic diagram of adding a synchronization information channel and a multi-frame indication in an OTU25(u)-RS frame according to the present application. As shown in Fig. 5, a synchronization information channel and a multi-frame indication are added to the OTU25(u)-RS frame, and a bandwidth of the synchronization information channel is about 0.6Mbit/s.

At operation 2, at the OTN device A as a sending terminal, generating a synchronization event information every 6 OTU25(u)-RS frames, that is, acquiring timestamp information at a start position of an OTU25(u)-RS frame whose multi-frame number is 1 in every 6 OTU25(u)-RS multi-frames.

At operation 3, performing generic framing procedure-frame mapping (GFP-F) encapsulation on the synchronization event information, inserting the encapsulated synchronization event information into a synchronization information channel of an OTU25(u)-RS frame whose multi-frame number is 2, and then sending the OTU25(u)-RS frame.

At operation 4, at the OTN device B on a receiving side, acquiring timestamp information at a start position of each received OTU25(u)-RS frame, in response to that a synchronization information channel of the OTU25(u)-RS frame bears timestamp information, performing GFP-F de-encapsulation on the borne timestamp information, and then comparing the de-encapsulated timestamp information with the acquired timestamp information, so as to implement time synchronization.

The GFP-F refers to a generic framing procedure (GFP) of frame mapping, which is a protocol data unit (PDU)-oriented data flow mode, and used as a data flow for transmission internet protocol (IP), multi-protocol label switching (MPLS) and Ethernet.

In some implementations, as shown in Fig. 4, an application scenario of 25G transmission is formed by using the two OTN devices including the OTN device A and the OTN device B.

At operation 1, at the OTN device A as a sending terminal, generating a synchronization event information every 6 OTU25(u)-RS frames, that is, acquiring timestamp information at a start position of every 6 OTU25(u)-RS multi-frames, configuring a counter to perform assignment statistics by counting a number of inserted CWMs.

At operation 2, performing GFP-F encapsulation on synchronization event information, inserting the encapsulated synchronization event information into a synchronization information channel of an OTU25(u) frame borne in the OTU25(u)-RS frame, and then sending the OTU25(u)-RS frame.

At operation 3, at the OTN device B on a receiving side, acquiring timestamp information at a start position of each received OTU25(u)-RS frame, in response to that a synchronization information channel of the OTU25(u) frame borne in the OTU25(u)-RS frame bears timestamp information, performing GFP-F de-encapsulation on the borne timestamp information, and then comparing the de-encapsulated timestamp information with the acquired timestamp information, so as to implement time synchronization.

In some implementations, as shown in Fig. 4, an application scenario of 25G transmission is formed by using the two OTN devices including the OTN device A and the OTN device B.

At operation 1, at the OTN device A as a sending terminal, generating a synchronization event information every 256 OTU25(u) multi-frames, that is, acquiring timestamp information at a start position of a first frame of every 256 OTU25(u) multi-frames.

At operation 2, recording a position offset between a first bit of the OTU25(u) frame and a first bit of a OTU25(u)-RS frame when the OTU25(u) frame is mapped into the OTU25(u)-RS frame, and timestamp information of the first bit of the OTU25(u)-RS frame.

At operation 3, adding the timestamp information of the first bit of the OTU25(u)-RS frame and the position offset between the OTU25(u) frame and the OTU25(u)-RS frame to obtain converted timestamp information as timestamp information of the OTU25(u) frame, performing GFP-F encapsulation on the timestamp information of the OTU25(u) frame, inserting the encapsulated timestamp information into a synchronization information channel of the OTU25(u) frame, and then sending the OTU25(u)-RS frame.

At operation 4, at the OTN device B on a receiving side, acquiring timestamp information at a start position of each received OTU25(u)-RS frame, in response to that the OTU25(u)-RS frame bears the first frame of 256 OTU25(u) multi-frames, extracting timestamp information from the synchronization information channel of the OTU25(u) frame, performing GFP-F de-encapsulation on the extracted timestamp information, and then comparing the de-encapsulated timestamp information with the acquired timestamp information, so as to implement time synchronization.

Fig. 6 is a schematic diagram of a position of a boundary of an OTU25(u) multi-frame in an OTU25(u)-RS frame according to the present application. In the implementations, each OTU25(u)-RS frame can bear a plurality of OTU25(u) frames, and each OTU25(u) multi-frame includes a plurality of OTU25(u) frames, i.e., each OTU25(u)-RS frame can bear a plurality of OTU25(u) multi-frames. As shown in Fig. 6, each OTU25(u) multi-frame includes two OTU25(u) frames, and a boundary of the OTU25(u) multi-frame follows CWM.

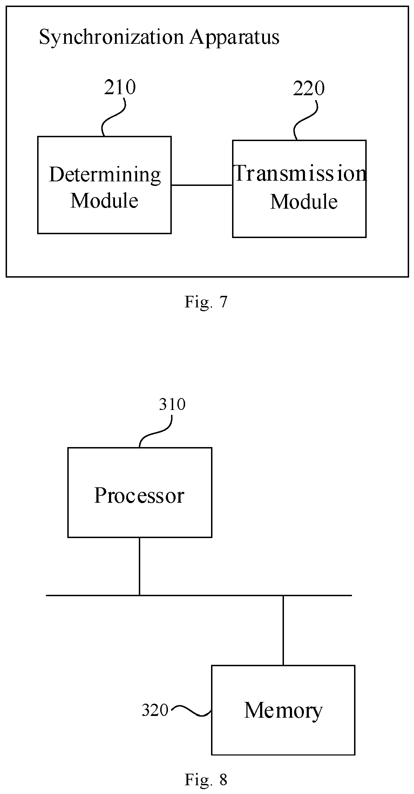

Fig. 7 is a structural block diagram of a synchronization apparatus according to the present application. As shown in Fig. 7, the synchronization apparatus includes a determining module 210 and a transmission module 220.

The determining module 210 is configured to determine an interface event timestamp point of synchronization event information, and encapsulate the synchronization event information.

The transmission module 220 is configured to insert the encapsulated synchronization event information into a synchronization information channel of a first preset frame or a second preset frame for performing transmission.

In some implementations, the determining module 210 is configured to take a first preset multi-frame event as the interface event timestamp point of the synchronization event information; and the transmission module 220 is configured to insert the encapsulated synchronization event information into a synchronization information channel of the first preset frame or an M-th first preset frame following the first preset frame for performing transmission, M is a positive integer.

In some implementations, the determining module 210 is configured to take a first preset multi-frame event as the interface event timestamp point of the synchronization event information; and the transmission module 220 is configured to insert the encapsulated synchronization event information into a synchronization information channel of a second preset frame borne by the first preset frame.

In some implementations, the determining module 210 is configured to take a second preset multi-frame event as the interface event timestamp point of the synchronization event information; and the transmission module 220 includes: a compensation unit configured to compensate the encapsulated synchronization event information according to a preset number of offset bits; and an inserting unit configured to insert the compensated synchronization event information into the synchronization information channel of the second preset frame for performing transmission.

In some implementations, the synchronization information channel of the first preset frame is determined by one of followings: a first preset number of bits of CWM overhead in the first preset frame; and a second preset number of bits of payload area in the first preset frame.

In some implementations, the number of the offset bits is determined by one of followings: calculating a number of offset bits between a start position of a first frame of the second preset multi-frame and a start position of the first preset frame when a first frame of the second preset multi-frame is mapped to the first preset frame,.

In some implementations, a statistical way of a number of the first preset multi-frames includes one of followings: performing statistics by accumulating a number of inserted alignment markers (AMs) or CWMs; adopting a third preset number of bits in AMs or CWMs as a statistical overhead of the number of the first preset multi-frames; and adopting a fourth preset number of bits in payload area in the first preset frame as a statistical overhead of the number of the first preset multi-frames.

In some implementations, in response to that a synchronization information channel and/or a statistical overhead of a number of multi-frames is determined by utilizing a preset number of bits in AMs or CWMs, performing scrambling operation on the synchronization information channel of the first preset frame and/or the statistical overhead of the number of multi-frames.

Fig. 8 is a schematic structural diagram of a device according to the present application. As shown in Fig. 8, the device includes a processor 310 and a memory 320. One or more processors 310 may be included in the device, and one processor 310 is illustrated in Fig. 8 as an example. One or more memories 320 may be included in the device, and one memory 320 is illustrated in Fig. 8 as an example. The processor 310 and the memory 320 of the device may be connected by a bus or other ways, and Fig. 8 illustrates a connection by a bus as an example. In the present disclosure, the device may be an OTN device.

The memory 320, as a computer-readable storage medium, may be configured to store software programs, computer-executable programs and modules, such as program instructions or modules corresponding to the device of the present application (e.g., the determining module 210 and the transmission module 220 in the synchronization apparatus). The memory 320 may include a storage program area and a storage data area, the storage program area may store an operating system, an application program for at least one function; and the storage data area may store data created according to use of the device, and the like. The memory 320 may include a high-speed random access memory, or a non-volatile memory, such as one or more magnetic storage devices, flash memories, or other non-volatile solid-state memories. In some implementations, the memory 320 may further include memories configured remotely with respect to the processor 310, and these remote memories may be connected to the device via a network. The examples of the network described above include, but are not limited to, the internet, intranets, local area networks, mobile communication networks, and combinations of these networks.

The device provided above may be configured to perform the synchronization method described above, with corresponding functions and effects.

The present application further provides a storage medium including computer-executable instructions, the computer-executable instructions, when executed by a computer processor, perform an synchronization method, and the synchronization method is applied to an OTN device, including: determining an interface event timestamp point of synchronization event information, and encapsulating the synchronization event information; and inserting the encapsulated synchronization event information into a synchronization information channel of a first preset frame or a second preset frame for performing transmission.

It should be understood by those skilled in the art, the term user equipment encompasses any suitable type of wireless user equipment, such as mobile telephones, portable data processing devices, portable web browsers or vehicle mounted mobile stations.

The present application may be implemented in hardware or special purpose circuits, software, logic or any combination thereof. For example, some aspects may be implemented in hardware, while other aspects may be implemented in firmware or software which can be executed by a controller, a microprocessor or other computing devices, although the present application is not limited thereto.

The present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object code written in any combination of one or more programming languages.

The block diagram of any logical flowchart in the accompanying drawings of the present application may represent program operations; or may represent interconnected logic circuits, modules, and functions; or may represent a combination of program operations and logic circuits, modules, and functions. A computer program may be stored in a storage device. The storage device may be of any type suitable for the local technical environment and may be implemented by using any suitable data storage technology, such as, but is not limited to, a Random Access Memory (RAM), a Read-Only Memory (ROM), an optical storage device and system (a digital video disc (DVD) or a compact disc(CD)) and the like. The computer-readable medium may include a non-transitory storage medium. The data processor may be of any type suitable for the local technical environment, such as, but is not limited to, a general computer, a specific computer, a microprocessor, a digital signal processor (DSP), an application specific integrated circuit (ASIC), a field programmable gate array (FPGA), and a processor based on a multi-core processor architecture.

## Claims

1. A synchronization method, comprising:
determining an interface event timestamp point of synchronization event information, and encapsulating the synchronization event information; and
inserting the encapsulated synchronization event information into a synchronization information channel of a first preset frame or a second preset frame for performing transmission.

2. The method of claim 1, wherein the determining an interface event timestamp point of synchronization event information comprises:
taking a first preset multi-frame event as the interface event timestamp point; and
the inserting the encapsulated synchronization event information into a synchronization information channel of a first preset frame or a second preset frame for performing transmission comprises:
inserting the encapsulated synchronization event information into the synchronization information channel of the first preset frame or an M-th first preset frame following the first preset frame for performing transmission, wherein M is a positive integer.

3. The method of claim 1, wherein the determining an interface event timestamp point of synchronization event information comprises:
taking a first preset multi-frame event as the interface event timestamp point; and
the inserting the encapsulated synchronization event information into a synchronization information channel of a first preset frame or a second preset frame for performing transmission comprises:
inserting the encapsulated synchronization event information into the synchronization information channel of the second preset frame borne by the first preset frame.

4. The method of claim 1, wherein the determining an interface event timestamp point of synchronization event information comprises:
taking a second preset multi-frame event as the interface event timestamp point; and
the inserting the encapsulated synchronization event information into a synchronization information channel of a second preset frame for performing transmission comprises:
compensating the synchronization event information according to a preset number of offset bits; and
inserting the compensated synchronization event information into the synchronization information channel of the second preset frame for performing transmission.

5. The method of claim 2, wherein the synchronization information channel of the first preset frame is determined by one of followings: a first preset number of bits of codeword marker (CWM) overhead in the first preset frame; and a second preset number of bits in payload area in the first preset frame.

6. The method of claim 4, wherein the number of the offset bits is determined by one of followings:
calculating a number of offset bits between a start position of a first frame of the second preset multi-frame and a start position of the first preset frame during the first frame of the second preset multi-frame is mapped to the first preset frame.

7. The method of claim 2 or 3, wherein a statistical way of a number of the first preset multi-frames comprises one of followings: performing statistics by accumulating a number of inserted alignment markers (AMs) or CWMs; adopting a third preset number of bits in AMs or CWMs as a statistical overhead of the number of the first preset multi-frames; and adopting a fourth preset number of bits in payload area in the first preset frame as the statistical overhead of the number of the first preset multi-frames.

8. The method of claim 5, wherein in response to that at least one of a synchronization information channel or a statistical overhead of a number of multi-frames is determined by utilizing a preset number of bits in AMs or CWMs, performing scrambling operation on at least one of the synchronization information channel of the first preset frame or the statistical overhead of the number of multi-frames.

9. A synchronization apparatus, comprising:
a determining module configured to determine an interface event timestamp point of synchronization event information, and encapsulate the synchronization event information; and
a transmission module configured to insert the encapsulated synchronization event information into a synchronization information channel of a first preset frame or a second preset frame for performing transmission.

10. A device, comprising:
a memory and at least one processor;
the memory is configured to store at least one program;
the at least one program, when executed by the at least one processor, causes the at least one processor to implement the synchronization method of any one of claims 1 to 8.

11. A storage medium having a computer program stored thereon, the computer program, when executed by a processor, implements the synchronization method of any one of claims 1 to 8.
